# EUROPÄISCHE PATENTSCHRIFT

(11) **EP 2 832 506 B1**
(45) Veröffentlichungstag und Bekanntmachung des Hinweises auf die Patenterteilung: **04.01.2017**
(21) Anmeldenummer: 14002245.0
(22) Anmeldetag: 01.07.2014
(51) Int. Cl.: B25J 21/02

(54) **Faltbare Handschuhbox mit einem gegenüber der Umgebung hermetisch abgeschlossenen Gehäuse**
Foldable glove box with a housing which is hermetically sealed off from the environment
Boîte à gants pliable dotée d'un boîtier fermé hermétiquement par rapport à l'environnement

(30) Priorität: 30.07.2013 DE 102013012570
(43) Veröffentlichungstag der Anmeldung: 04.02.2015
(73) Patentinhaber: OWR GmbH, 74834 Elztal-Rittersbach (DE)
(72) Erfinder: Wölfel, Roman, Dr. med., 82140 Olching (DE); Dienst, Nico, 68799 Reilingen (DE)
(74) Vertreter: Kesselhut, Wolf

(56) Entgegenhaltungen:
- GB-A- 2 392 129
- US-A1- 2007 157 653

## Beschreibung

Die Erfindung betrifft eine Handschuhbox mit einem gegenüber der Umgebung hermetisch abgeschlossenen Gehäuse gemäß dem Oberbegriff von Anspruch 1.

Zur Untersuchung von Materialien, die gegebenenfalls gefährliche Kontaminationen aufweisen oder z.B. seuchenverdächtige Auffälligkeiten zeigen, bedarf es der Feststellung von Sachverhalten, deren Ursprung möglicherweise mit schädlichen Stoffen, insbesondere biologischer oder chemischer Herkunft, in Zusammenhang steht. Hierzu bedarf es der Handhabung und Behandlung dieser Stoffe in einem gegenüber der Umgebung hermetisch abgeschlossenen Raum. Dies ist einerseits für ein unverfälschtes Untersuchungsergebnis und andererseits zum Schutze für die am Untersuchungsprozess beteiligten Personen von großer Bedeutung.

Diese Untersuchungen werden herkömmlicherweise in Instituten durchgeführt, die über eigens hierfür eingerichtete Laboratorien verfügen. Um schnell auf bestimmte Ereignisse reagieren zu können, ist es allerdings erforderlich, noch vor Ort deren Ursache zu klären. Der Transport der hierfür zu untersuchenden Objekte zu den stationären Laboratorien nimmt meist eine unakzeptabel lange Zeit in Anspruch, sodass gegebenenfalls nicht in angemessenem Umfang oder zeitnah reagiert werden kann. Die hier angesprochenen Ereignisse können z.B. unklare Krankheitsfälle und Krankheitsausbrüche sein, deren Ursache möglicherweise mit der Freisetzung biologischer Kampfstoffe in Zusammenhang steht. Hierzu ist es u.a. notwendig, Materialien menschlicher, tierischer und anderer Art mit mikrobiologischen Methoden unter einfachsten Umgebungsbedingungen aufzubereiten und zu analysieren. Dabei ist mit der Konfrontation von bekannten und unbekannten Krankheitserregern, Toxinen oder giftigen Chemikalien zu rechnen. Es muss mit den vorhandenen Mitteln ausgeschlossen werden können, dass die untersuchten Stoffe aus dem hermetisch abgeschlossenen Raum austreten oder deren Eigenschaften außerhalb dieses Raumes zur Wirkung kommen können. Die Schutzmaßnahme kann dadurch verstärkt werden, dass im hermetisch abgeschlossenen Raum ein Unterdruck aufgebaut und aufrechterhalten wird. In der Regel führen erhöhte Sicherheitsmerkmale auch zu einer aufwendigeren Technik der Laboreinrichtungen.

Um vor Ort eine Untersuchung durchführen zu können, werden mobile Einrichtungen eingesetzt.

Aus der US 6 851 769 B2 ist eine transportable Handschuhbox bekannt, die aus einer zeltartigen Kunststofffolie besteht. Nach dem Ausbreiten der Folie wird diese an einem Haken aufgehängt und zieht durch ihr Eigengewicht die Folie zu einer pyramidenförmigen Gehäuseform. Die so gebildete Handschuhbox besitzt keinerlei Eigensteifigkeit. Die Gehäuseform bleibt beim Aufbau eines Vakuums innerhalb der Box nicht stabil.

Unter dem Handelsnamen Rapid Containment Kit vertreibt das Unternehmen Germfree eine kuppelartige Handschuhbox. Es handelt sich dabei um ein aus durchsichtiger Folie bestehendes flexibles Gehäuse, dessen Folienabschnitte miteinander verschweißt sind. Nachteilig ist es, dass das Foliengehäuse keinem Unterdruck standhält.

Aus der GB 2 392 129 A ist eine faltbare Handschuhbox bekannt, die durch Verstrebungen als formstabile Faltbox ausgebildet ist. Diese Verstrebungen nehmen Platz, wenn die Faltbox im zugeklappten Zustand ist.

Handschuhboxen der herkömmlichen Art, wie sie aus dem Stand der Technik bekannt sind, eignen sich entweder nicht zum mobilen Einsatz oder können die in einem stationären Labor gegebenen Schutzbedingungen nicht gleichwertig ersetzen oder erfüllen.

Demgemäß ist es eine Aufgabe der vorliegenden Erfindung, eine mobile und raumsparende Handschuhbox zu schaffen, die nahezu alle Anforderungen an eine stationäre und in sich abgeschlossene Laboreinheit erfüllt.

Diese Aufgabe wird erfindungsgemäß durch eine Handschuhbox mit den Merkmalen von Anspruch 1 gelöst.

Weitere Merkmale der Erfindung sind in den abhängigen Ansprüchen beschrieben.

Gemäß der Erfindung umfasst eine Handschuhbox ein gegenüber der Umgebung hermetisch abgeschlossenes Gehäuse, in dessen Innenraum von außen zugängliche Handschuhe angeordnet sind, um innerhalb des Gehäuses Gefahrenstoffe und Gegenstände zu handhaben. Am Gehäuse sind Anschlüsse zum Anschluss von für den Handhabungsprozess benötigten Werkzeugen, Hilfsaggregaten und/oder Schleusen zum Einbringen der Gefahrenstoffe und Gegenstände in den Innenraum angeordnet.

Die erfindungsgemäße Handschuhbox zeichnet sich dadurch aus, dass das Gehäuse als formstabile Faltbox ausgebildet ist.

Durch die Erfindung wird es möglich, insbesondere Gefahrenstoffe und chemisch oder biologisch verseuchte Objekte und dergleichen in einer vom Benutzer hermetisch abgeschlossenen Umgebung an beliebigen Orten zu analysieren und/oder zu manipulieren. Die erfindungsgemäß vorgeschlagene Handschuhbox ist einerseits robust und andererseits leicht und platzsparend zu transportieren. Darüber hinaus können mit der Erfindung logistische Anforderungen, z.B. eine schnelle Verlegbarkeit, sowohl im zivilen als auch militärischen Bereich erfüllt werden. Weiterhin ist durch die Materialwahl der Erfindung sowohl eine Desinfektion und Dekontamination mit teilweise sehr aggressiven Mitteln möglich, ohne das Material nachhaltig zu schädigen oder die Integrität der Handschuhbox zu gefährden.

Bei der bevorzugten Ausführungsform der Erfindung ist es vorgesehen, dass das Gehäuse zumindest eine eigensteife Frontseite, zwei eigensteife stehende Seitenwände und eine eigensteife Gehäusedecke in Form eines Deckels umfasst. Die beiden Seitenwände und die Frontwand sind im Bereich der aneinandergrenzenden Ecken gelenkig durch ein beschichtetes Gewebeband, bevorzugt beschichtetes Polyestergewebe, verbunden, welches von der Außenseite aus unter Bildung einer gelenkigen Faltkante als Streifen auf die Eckbereiche aufgebracht ist. Das Gewebe selbst überbrückt dabei die bei aufgestellter Handschuhbox vertikal verlaufenden Gehäusekanten und führt dadurch an den gelenkigen Verbindungsstellen zu einer hohen Dichtigkeit. Die Rückwand, die grundsätzlich auch aus einem flexiblen Material, z.B. einer Kunststoffolie, bestehen kann, ist bei der bevorzugten Ausführungsform der Erfindung ebenfalls aus einem eigensteifen Werkstoff beschaffen und mit den beiden Seitenwänden in gleicher Weise wie die Frontwand über ein in den Eckbereichen aufgebrachtes Gewebeband gelenkig verbunden.

Demgegenüber besteht der Boden der erfindungsgemäßen Handschuhbox aus einem flexiblen Material, bevorzugt aus demselben beschichteten Gewebeband, welches zur Bereitstellung der gelenkigen Faltkante zwischen den Seitenwänden sowie der Font- und Rückwand eingesetzt wird. Dieses ist bevorzugt umlaufend mit den Außenseiten der eigensteifen Seiten-, Front- und Rückwandelementen an der Unterseite derselben verklebt, so dass die Seitenwände sowie die Front- und Rückwand über die beschichteten Gewebebandstreifen sowie den angeklebten Boden gas- und flüssigkeitsdicht gelenkig miteinander verbunden sind.

Weiterhin ist auch der aus einem eigensteifen Werkstoff bestehende Deckel an einer seiner vier umlaufenden Kanten über das zuvor beschriebene beschichtete Gewebeband unter Bildung einer Faltkante gelenkig, sowie auch gas- und flüssigkeitsdicht, bevorzugt mit der Frontwand verbunden. Die gelenkige Verbindung ist dabei vorzugsweise derart, dass der Gehäusedeckel nach außen hin über die obere Kante der Frontwand hinweg umgeschlagen werden kann und plan auf der Frontwand zu liegen kommt. Alternativ kann der Deckel jedoch auch gelenkig an der Rückwand befestigt sein. Die übrigen drei Kanten des Deckels sind mit einem Reißverschluss versehen, mittels welchem sie lösbar mit den oberen Rändern der beiden Seitenteile sowie der Frontwand verbunden werden können, welche hierzu ein entsprechendes Reißverschluss-Gegenstück besitzen. Anstelle eines Reißverschlusses kann ebenfalls Klett- oder Magnetband zum Einsatz gelangen.

Bei einer weiteren Ausführungsform der Erfindung kommt in vorteilhafter Weise ein Reißverschluss aus spritzwasserdichtem beschichtetem Polyurethan zum Einsatz, der ähnlich einem bekannten Gefrierbeutelverschluss arbeitet, und der auch zusätzlich zu einem herkömmlichen Zahn-Reißverschluss vorzugsweise auf der Außenseite des Gehäusedeckels verläuft.

Um nun ein Zusammenfalten der erfindungsgemäßen Handschuhbox zu ermöglichen, sind die beiden Seitenwände jeweils in zwei eigensteife Teilabschnitte unterteilt, die, bezogen auf die aufgestellte Handschuhbox, über eine vertikale Faltkante aus beschichtetem Gewebeband gelenkig miteinander verbunden sind. Die beiden vertikalen Faltkanten an den Seitenteilen sowie auch die zuvor beschriebenen Faltkanten zwischen dem jeweiligen Teilabschnitt einer Seitenwand und der Front- sowie auch der Rückwand, sind dabei in der Weise ausgestaltet, dass die beiden Teilabschnitte eines jeden Seitenteils in den Innenraum hinein soweit eingeknickt und umgeschlagen werden können, bis die beiden Teilabschnitte plan aufeinander zu liegen kommen. Die Flexibilität des Materials des Bodens erlaubt es dabei, die Front- und Rückwand soweit aufeinander zu zu bewegen, bis die Innenseite der Frontwand und der Rückwand an den jeweiligen Innenwänden der vier eigensteifen Teilabschnitte der Seitenwände plan zu liegen kommen. Der flexible Boden steht demgegenüber auf der Außenseite der so gebildeten flachen Sandwichstruktur aus Frontwand, Rückwand und den dazwischenliegenden Teilabschnitten der Seitenwände hervor.

Eine besonders gute Gas- und Flüssigkeitsdichtigkeit in Verbindung mit einer langen Haltbarkeit wird in besonderem Maße dann erreicht, wenn als Gewebe Polyestergewebe eingesetzt wird, welches mit Butyl beschichtet ist. Besonders vorteilhaft ist es hierbei, dass Butyl selbst nicht reaktiv ist. Da die Faltkanten einer relativ hohen flexiblen Biegebelastung unterworfen sind, ist in diesen Bereichen das butylbeschichtete Polyestergewebe eine ideale Materialauswahl, da dort die Gasdichtigkeit und Chemikalienbeständigkeit aufgrund der Materialeigenschaften von Butyl auch über einen langen Zeitraum hinweg erhalten bleibt.

Die Erfindung sieht vor, dass zumindest die Decke des Gehäuses, bevorzugt jedoch auch die Frontseite und die Seitenwände, aus einem durchsichtigen Werkstoff bestehen. Dies unterstützt die uneingeschränkte Sicht auf die zu untersuchenden Proben und Gegenstände, ohne dass hierfür zusätzliche optische Hilfsgeräte wie Kameras benötigt werden. Die eigensteifen Seitenwände bestehen bevorzugt aus Polycarbonat mit einer Wandstärke von vorzugsweise 3 mm. Die optische Klarheit von Polycarbonat gewährleistet in vorteilhafter Weise ein längeres und ermüdungsfreies Arbeiten und beugt damit möglichen Fehlern vor.

Um beim Einsatz der erfindungsgemäßen portablen Handschuhbox optimale Laborbedingungen zu erhalten, ist es nach einem weiteren der Erfindung zugrunde liegenden Gedanken vorgesehen, dass an den Seitenwänden und am Gehäusedeckel hermetisch verschließbare Adaptionsöffnungen angeordnet sind. Die Adaptionsöffnungen dienen hierbei insbesondere zum gasdichten Anschließen sowie zur Befestigung der Handschuhe und der übrigen für einen Untersuchungsprozess benötigten Geräte und Hilfsmittel.

Hierbei ist insbesondere der Eingriffsbereich, an dem die Handschuhe befestigt sind, aufgrund des Hantierens einer erhöhten mechanischen Belastung ausgesetzt, sodass die Handschuhe zumindest im Ärmelbereich aus elastischem Butyl beschaffen sind. Dieses Material kann auch für die Handschuhe selbst gewählt werden, wobei hierfür grundsätzlich auch das Material allgemeiner Laborhandschuhe geeignet ist. Bei der bevorzugten Ausführungsform der Erfindung sind die Handschuhe mit Hilfe von Kunststoffringen adaptierbar ausgeführt. Hierdurch ergibt sich der Vorteil, dass jeder der beiden Handschuhe in seiner Größe und Materialbeschaffenheit an die jeweilige Situation angepasst, und sogar im Betrieb, ohne die Dichtigkeit der Handschuhbox zu gefährden, ausgewechselt werden kann.

Eine weitere Ausgestaltung der Erfindung sieht vor, dass die Handschuhbox eine an die Adaptionsöffnungen anschließbare Unterdruck-Gebläseeinheit, mindestens einen Filter, je eine Eingangs- und eine Ausgangsschleuse sowie einen Materialauswurf umfasst. Die eingesetzten Filteranschlüsse und Schleusen entsprechen hierbei dem geforderten Labor- und Sicherheitsstandard.

Hierdurch wird es ermöglicht, im Innenraum der Handschuhbox einen Unterdruck von z.B. - 300 mbar zu erzeugen, der verhindert, dass gefährliche Stoffe aus dem Innenraum austreten können. Um bei der Beaufschlagung des Innenraums mit Unterdruck die Eigensteifigkeit der entfalteten Handschuhbox in vorteilhafter Weise weiter zu erhöhen, kann durch die an der Oberseite nach dem Umschlagen des Deckels freigegebene Gehäuseöffnung eine eigensteife Bodenwanne, z.B. aus Kunststoffmaterial, eingesetzt werden, an deren Seitenwänden sich die Innenseiten der Front- und Rückwand sowie der Seitenwände abstützen. Die Bodenwanne bietet dabei nicht nur den Vorteil, dass sich der Innenraum der Box gewünschten Falls mit einem noch größeren Unterdruck beaufschlagen lässt, sondern stellt ebenfalls sicher, dass aus untersuchten Gegenständen austretende Flüssigkeiten aufgefangen werden und nicht auf die flexible Bodenfolie gelangen, was das Reinigen des Innenraums der Box erheblich erleichtert.

Die Arbeitsbedingungen im Innenraum der erfindungsgemäßen Handschuhbox lassen sich dadurch optimieren, dass die Anschlüsse eines Gebläses zum Absaugen von verunreinigter Luft aus dem Innenraum und zum erneuten Zuführen von gereinigter Luft in den Innenraum an die Adaptionsöffnungen angeschlossen werden, die jedoch für den Fall, dass derartige Gebläse nicht zum Einsatz gelangen, entsprechend hermetisch durch Blindverschlüsse verschlossen werden können. Dasselbe gilt für Kabel- und Schlauchdurchführungen, die in entsprechender Weise an die Adaptionsöffnungen angeschlossen werden können, um beispielsweise elektrische Energie für ein elektrisch betriebenes Laborgerät etc.in den Innenraum zuzuführen.

Die Erfindung wird nachfolgend mit Bezug auf die Zeichnungen anhand von bevorzugten Ausführungsformen beschrieben. In den Zeichnungen zeigen:
- Fig. 1: eine perspektivische Darstellung der erfindungsgemäßen entfalteten Handschuhbox mit allen unverschlossenen Öffnungen,
- Fig. 2: eine Frontansicht der Handschuhbox,
- Fig. 3: eine Seitenansicht der Handschuhbox von rechts,
- Fig. 4: eine Seitenansicht der Handschuhbox von links,
- Fig. 5: eine Draufsicht auf die bestimmungsgemäße Handschuhbox,
- Fig. 6: eine Rückansicht der Handschuhbox,
- Fig. 7: eine Draufsicht der Handschuhbox mit adaptierten Anschlüssen, und
- Fig. 8: eine Aufsicht auf die Handschuhbox mit teilweise eingefalteten Seitenwänden und geöffnetem Gehäusedeckel.

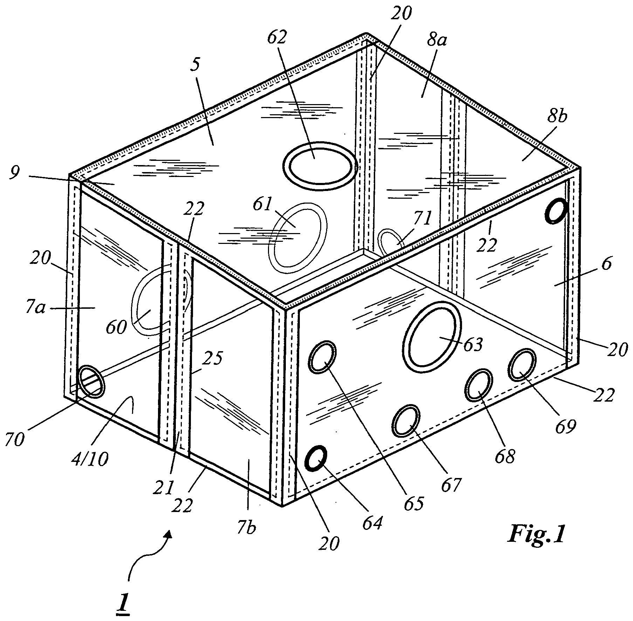

Wie in Fig. 1 anhand einer aufgestellten erfindungsgemäßen Handschuhbox gezeigt ist, umfasst diese ein Gehäuse 1 in Form einer Faltbox, das eine eigensteife Frontwand 5, eine eigensteife Rückwand 6 und eigensteife Seitenwände 7 und 8 mit Teilabschnitten 7a, 8a sowie 7b, 8b aufweist, die über Gewebebandstreifen 20 aus Polyestergewebe, welches mit Butyl beschichtet ist, unter Erzeugung entsprechender Faltkanten 25 gelenkig miteinander verbunden sind. An der Oberseite besitzt das Gehäuse einen Deckel 9, welcher ebenfalls durch einen Gewebebandstreifen 20 unter Erzeugung einer Faltkante 25 gelenkig mit der Frontwand der erfindungsgemäßen Box 1 verbunden ist. Der Gehäusedeckel 9 ist mit einem Reißverschluss 40 mit den beiden Seitenwänden 7, 8 sowie der Rückwand 6 verbindbar, um das Gehäuse 1 im aufgefalteten Zustand zu stabilisieren.

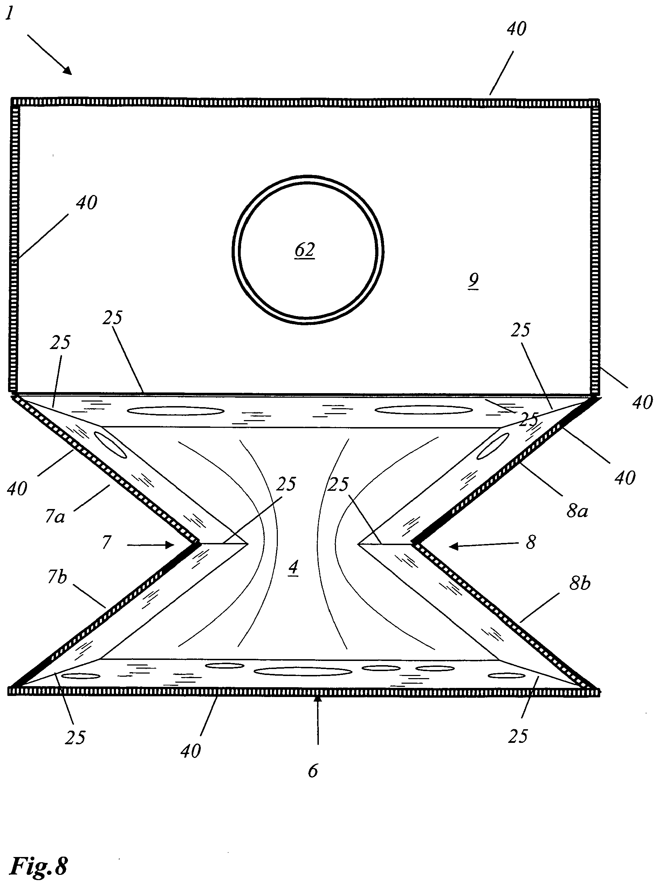

Die beiden Teilabschnitte 7a, 7b der ersten Seitenwand 7 sowie auch die beiden Teilabschnitte 8a, 8b der zweiten Seitenwand 8 sind über den auf der Außenseite des Gehäuses 1 angeordneten Gewebebandstreifen 20 in der Weise gelenkig verbunden, dass sie bei geöffnetem Reißverschluss 40 und gelöstem und in Richtung zur Rückwand 6 des Gehäuses 1 umgeschlagenem Deckel 9 in den Innenraum der Box 1 hinein gefaltet werden können, wie das in Fig. 8 angedeutet ist. Im vollständig zusammengefalteten Zustand, der in den Figuren nicht dargestellt ist, liegen die Innenseiten der Teilabschnitte 7a, 7b und 8a, 8b nach Art eines Sandwiches flach zwischen der Frontwand 5 und der Rückwand 6 aufeinander auf. Um dies zu ermöglichen, ist der Boden 4 der erfindungsgemäßen Handschuhbox aus einem flexiblen Werkstoff gebildet, der vorzugsweise aus dem gleichen Material wie die beschichteten Gewebebandstreifen 20 besteht, welche die Ecken gelenkig und gasdicht miteinander verbinden. Die Handschuhbox lässt sich aufgrund ihrer sehr geringen Höhe im vollständig zusammengefalteten Zustand bequem in einer Tragetasche transportieren, die eine Grundfläche besitzt, die geringfügig größer als die Grundfläche der Frontwand 5, bzw. des Deckels 9 ist, welche vorzugsweise dieselben Abmessungen aufweisen.

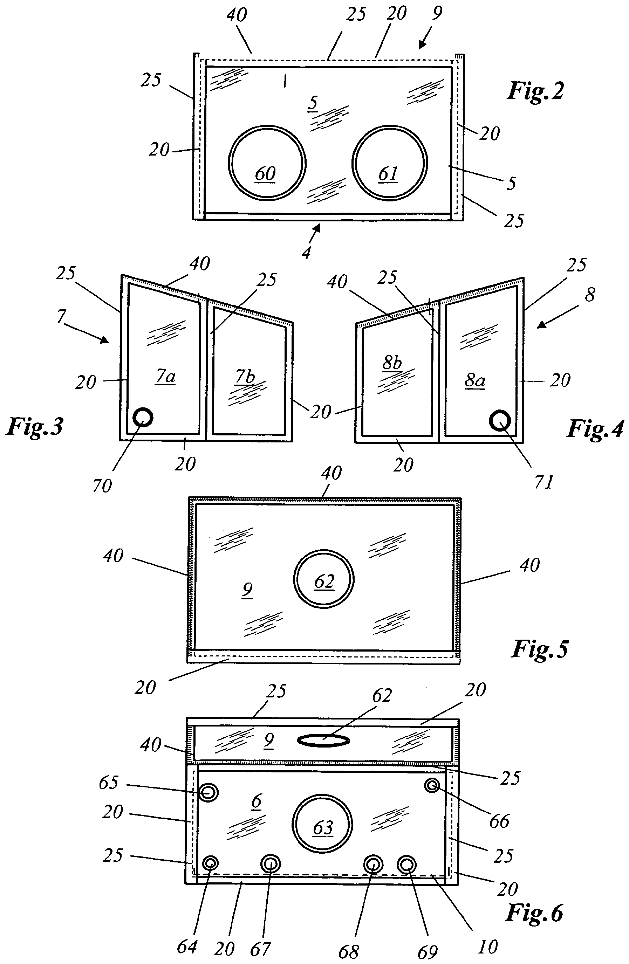

Um dem Gehäuse 1 im auseinandergefalteten Zustand eine zusätzliche Stabilität zu verleihen, ist eine Arbeitswanne 10 aus Edelstahl oder Hart-PVC oder dergleichen durch eine im Deckenbereich nach dem Umschlagen des Gehäusedeckels 9 zur Frontseite 5 hin freigegebene Öffnung hindurch einsetzbar. Die lediglich in der Darstellung der Fig. 6 in gestrichelten Linien angedeutete Arbeitswanne 10 besitzt dabei eine solche Größe, dass die Innenseiten der Seitenwände 7 und 8 sowie auch der Frontwand 5 und der Rückwand 6 an der Außenseite der Arbeitswanne 10 anliegen und diese entgegen der Zugspannung des flexiblen Bodens 4 nach außen drängen, wodurch der flexible, bevorzugt als Gewebefolie ausgebildete Werkstoff des Bodens 4, gespannt wird. Mit der Bezugsziffer 25 sind hierbei die Faltkanten bezeichnet, die sich überall an denjenigen Stellen befinden, an denen ein Zusammenfalten der Gehäuseteile ermöglicht werden soll.

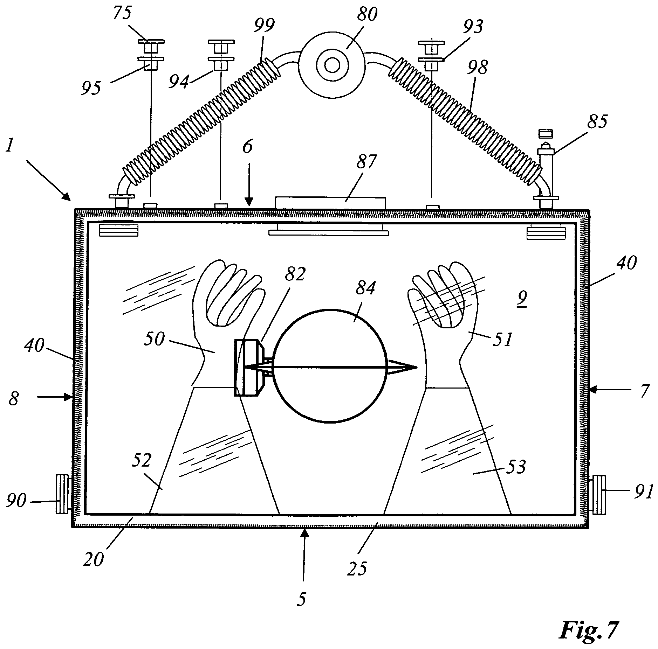

In den Figuren 1 bis 6 sind die Adaptionsöffnungen 60 bis 71 ohne angeschlossene Elemente wiedergegeben. Auf der Frontseite 5 der erfindungsgemäßen Handschuhbox, d.h.auf der Seite, auf der der Benutzer der Box steht, wenn er mit dieser arbeitet, befinden sich zwei Öffnungen 60, 61 an denen, wie bevorzugt auch bei allen anderen Öffnungen, eine nachfolgend als hermetische Adaption bezeichnete Flüssigkeit- und gasdichte Verbindung zu den anzuschließenden Gerätschaften und Hilfseinrichtungen, wie beispielsweise den in Fig. 7 gezeigten Handschuhen 50, 51, erfolgt.

Der Gehäusedeckel 9 besitzt eine Öffnung 62, an der bevorzugt eine in Fig. 7 angedeutete Eingabeschleuse 84 angeschlossen wird. Der Anschluss erfolgt mittels eines in die Oberseite eingesetzten Flanschrings aus Hart-PVC, der bevorzugt eine Doppelnut und einen 2-fach-O-Ring zur Anbindung an die Schleusenkammer umfasst, welche vorzugsweise aus mit Butyl beschichtetem Polyestergewebe besteht. Die Verbindung erfolgt hierbei bevorzugt über einen für Spritzwasser dichten Reißverschluss und eine Filterverschraubung, was in Fig. 7 nicht näher gezeigt ist.

In der Rückwand 6 ist mittig eine Öffnung 63 für den Materialauswurf 87 vorgesehen. Nicht abgebildet ist ein eingesetzter Hart-PVC-Flanschring mit Doppelnut und 2-fach O-Ring-Einbindung für Abfallsäcke oder Schlauchfolien. Der Deckel besteht aus Hart-PVC mit O-Ring-Dichtung und Spannknopf.

Wie in der Darstellung der Fig. 7 angedeutet ist, wird die Ausgangsschleuse 85 an einer Öffnung 64 in der linken unteren Ecke der Rückseite 6 angeschlossen. Diese ist bevorzugt eine Hart-PVC-Schleuse mit herausnehmbarem Probenträger und Ventilen für die Zu- und Abfuhr von Desinfektionsflüssigkeit aus dem Innenraum der Materialschleuse.

Das Absaugen der Luft nach außen und das Belüften des Innenraums erfolgen bevorzugter Weise über ein dekontaminierbares Unterdruckgebläse 80 durch die Öffnungen 65 und 66 in der oberen linken und rechten Ecke der Rückwand 6 hindurch. Das Unterdruckgebläse 80 ist hierzu mit dem Gehäuse 1 über unterdruckbeständige Faltenschläuche 98, 99 verbunden.

Mit den Bezugsziffern 67 und 68 sind die in der Rückseite 6 angeordneten Öffnungen für Kabel- und Schlauchdurchführungen 93, 94 bezeichnet, und die Bezugsziffer 69 deutet eine zusätzliche Öffnung 69 für eine weitere Kabeldurchführung 95 an.

In den beiden im Bereich der Frontwand 5 angeordneten Teilabschnitten 7a, 8a der Seitenwände 7 und 8 sind Öffnungen 70 und 71 für die Luftansaugung 90 und Luftabsaugung 91 gebildet.

Entsprechende Filter 82 sorgen dafür, dass Schadstoffe nicht aus dem Innenraum in die Umgebung gelangen können und umgekehrt. An den Stellen, an denen vorhandene Öffnungen bei der Benutzung der Vorrichtung momentan nicht für den Anschluss von Geräten oder Zuführungen benötigt werden, sind diese bevorzugt durch Blindverschlüsse 75 verschlossen.

Die Verschraubungen, insbesondere die doppelseitigen Filterverschraubungen, umfassen einen hier nicht im Detail dargestellten Butylgummiformsockel, der ein Polyamidoberteil mit einem Rundgewinde und einer Dichtung besitzt. Bei den Kabel- und Schlauchdurchführungen sind, wie auch bei den Blindverschraubungen, sind bevorzugt zusätzlich eine ebenfalls nicht dargestellte herausnehmbare Mehrschichtquetschdichtung und eine Anpressverschraubung vorgesehen.

### Liste der Bezugszeichen

- 1: Gehäuse
- 4: Boden
- 5: Frontwand
- 6: Rückwand
- 7: Seitenwand
- 7a: erster Teilabschnitt
- 7b: zweiter Teilabschnitt
- 8: Seitenwand
- 8a: erster Teilabschnitt
- 8b: zweiter Teilabschnitt
- 9: Gehäusedeckel
- 10: Bodenwanne
- 20: beschichtetes Gewebeband
- 25: Faltkante
- 40: Reißverschluss
- 50: Handschuh links
- 51: Handschuh rechts
- 52: Ärmelbereich von 50
- 53: Ärmelbereich von 51
- 60: Adaptionsöffnung für 50
- 61: Adaptionsöffnung für 51
- 62: Adaptionsöffnung für 84
- 63: Adaptionsöffnung für 87
- 64: Adaptionsöffnung für 85
- 65: Adaptionsöffnung für 80
- 66: Adaptionsöffnung für 80
- 67: Adaptionsöffnung für 93
- 68: Adaptionsöffnung für 94
- 69: Adaptionsöffnung für 95
- 70: Adaptionsöffnung für 90
- 71: Adaptionsöffnung für 91
- 75: Blindverschlüsse
- 80: Unterdruckgebläse
- 82: Filter
- 84: Eingabeschleuse
- 85: Ausgangsschleuse
- 87: Materialauswurf
- 90: Luftansaugung
- 91: Luftabsaugung
- 93: Kabeldurchführung
- 94: Schlauchdurchführung
- 95: Kabeldurchführung
- 98: Faltenschlauch
- 99: Faltenschlauch

## Patentansprüche

1. Handschuhbox mit einem gegenüber der Umgebung hermetisch abgeschlossenen Gehäuse (1), in dessen Innenraum von außen zugängliche Handschuhe (50, 51) angeordnet sind, um innerhalb des Gehäuses (1) befindliche Gefahrenstoffe und Gegenstände zu handhaben, wobei am Gehäuse (1) Anschlüsse (60-71) zum Anschluss von für den Handhabungsprozess benötigten Werkzeugen, Hilfsaggregaten und/oder Schleusen zum Einbringen der Gefahrenstoffe und Gegenstände in den Innenraum vorgesehen sind,
**dadurch gekennzeichnet,**
**dass** das Gehäuse (1) als formstabile Faltbox ausgebildet ist, wobei das Gehäuse (1) eine Frontwand (5), zwei Seitenwände (5, 6, 7, 8) und einen Gehäusedeckel (9) aus einem eigensteifen Werkstoff besitzt, welche durch Gewebebandstreifen (20), insbesondere aus beschichtetem Polyestergewebe, unter Bildung von Faltkanten (25) gelenkig miteinander verbunden sind.

2. Handschuhbox nach Anspruch 1,
**dadurch gekennzeichnet,**
**dass** die Frontwand (5) und die beiden Seitenwände (7, 8) sowie auch die Rückwand (6) an ihrer Unterseite mit einem Boden (4) aus flexiblem Werkstoff verbunden sind, und dass jede der beiden Seitenwände (7, 8) einen ersten und zweiten Teilabschnitt (7a, 8a) besitzt, welche unter Bildung einer sich bei aufgestelltem Gehäuse (1) vertikal erstreckenden Faltkante durch Gewebeband (20) in der Weise gelenkig miteinander verbunden sind, dass sich die jeweiligen Teilabschnitte (7a, 7b; 8a, 8b) unter gleichzeitiger Annäherung der Frontwand (5) und Rückwand (6) in den Innenraum hinein falten lassen.

3. Handschuhbox nach Anspruch 1 oder 2.
**dadurch gekennzeichnet,**
**dass** das Polyestergewebe mit Butyl beschichtet ist.

4. Handschuhbox nach mindestens einem der vorstehenden Ansprüche,
**dadurch gekennzeichnet,**
**dass** die Frontwand (5) und der Deckel (9) des Gehäuses (1) zumindest teilweise aus einem optisch durchsichtigen Werkstoff, insbesondere aus Polycarbonat, bestehen.

5. Handschuhbox nach mindestens einem der vorstehenden Anspruche,
**dadurch gekennzeichnet,**
**dass** der Gehäusedeckel (9) durch einen Klettverschluss und/oder durch einen Reißverschluss (40), vorzugsweise einem Reißverschluss aus spritzwasserdichtem beschichtetem Polyurethan, mit den Seitenteilen und der Rückwand (5) des Gehäuses (1) verbindbar ist.

6. Handschuhbox nach mindestens einem der vorstehenden Ansprüche,
**dadurch gekennzeichnet,**
**dass** an den Seitenwänden (5, 6, 7, 8) und an der Gehäusedeckel (9) hermetisch verschließbare Adaptionsöffnungen (60-71) vorgesehen sind.

7. Handschuhbox nach mindestens einem der vorstehenden Ansprüche,
**dadurch gekennzeichnet,**
**dass** die Handschuhe (50, 51) zumindest im Ärmelbereich (52, 53) aus elastischem Butyl beschaffen sind.

## Claims

1. Glove box with a housing (1) sealed hermetically from the environment in whose interior gloves (50, 51) are arranged which are accessible from the exterior in order to be able to handle dangerous substances and objects located inside the housing (1), wherein the housing (1) is provided with ports (60-71) to provide access to tools, auxiliary power units needed for the handling process and/or locks for introducing the dangerous substances and objects into the interior,
**characterised in that**
the housing (1) is designed as a folding box wherein the housing (1) has a front wall (5), two side walls (5, 6, 7, 8) and a housing cover (9) made from an inherently stiff material and which are connected together so that they fold by strips of fabric tape (20), in particular from coated polyester fabric to form folding edges (25).

2. Glove box according to claim 1,
**characterised in that**
the front wall (5) and the two side walls (7, 8) and the rear wall (6) are connected at their underside to a base (4) made from a flexible material, and that each of the two side walls (7, 8) have a first and second partial section (7a, 8a), which are connected together by fabric tape (20) so that they fold to form a folding edge extending vertically when the housing (1) is set up such that the respective partial sections (7a, 7b; 8a, 8b) are folded inwards into the interior at the same time as the front wall (5) and rear wall (6) approach each other.

3. Glove box according to claim 1 or 2,
**characterised in that**
the polyester fabric is coated with butyl.

4. Glove box according to at least one of the preceding claims,
**characterised in that**
the front wall (5) and the cover (9) of the housing (1) consist at least partly of an optically transparent material, in particular polycarbonate.

5. Glove box according to at least one of the preceding claims,
**characterised in that**
the housing cover (9) can be fastened by a Velcro fastener and/or by a zip fastener (40), preferably a zip fastener of polyurethane with a splash-proof coating, to the side parts and the rear wall (5) of the housing (1).

6. Glove box according to at least one of the preceding claims,
**characterised in that**
hermetically closable adaptable openings (60-71) are provided on the side walls (5, 6, 7, 8) and on the housing cover (9).

7. Glove box according to at least one of the preceding claims,
**characterised in that**
the gloves (50, 51) are made, at least in the arm area (52, 53), from elastic butyl.

## Revendications

1. Boîte à gants avec un coffret (1) fermé hermétiquement par rapport à l'environnement, dans l'espace intérieur duquel sont agencés des gants (50, 51) accessibles de l'extérieur, permettant de manipuler des substances dangereuses et des objets se trouvant à l'intérieur dudit coffret (1), dans laquelle des raccords (60 à 71), destinés au raccordement d'outils nécessaires pour le procédé de manipulation, d'unités auxiliaires et/ou de sas permettant l'introduction des substances dangereuses et des objets dans l'espace intérieur, sont prévus au niveau du coffret (1),
**caractérisée en ce que**,
le coffret (1) est réalisé sous la forme d'une boîte pliante dimensionnellement stable, dans laquelle le coffret (1) possède une paroi avant (5), deux parois latérales (5, 6, 7, 8) et un couvercle de coffret (9) en une matière à rigidité inhérente, qui sont reliés les uns aux autres de manière articulée grâce à des bandes de tissu (20), en particulier en tissu polyester enduit, avec formation d'arêtes de pliage (25).

2. Boîte à gants selon la revendication 1,
**caractérisée en ce que**,
la paroi avant (5) et les deux parois latérales (7, 8) ainsi qu'également la paroi arrière (6) sont reliées, au niveau de leur faces inférieure, à un fond (4) en matière flexible,
et chacune des deux parois latérales (7, 8) possède des premier et deuxième tronçons (7a, 8a) qui sont reliés l'un à l'autre de manière articulée grâce à la bande de tissu (20) avec formation d'une arête de pliage s'étendant verticalement lorsque le coffret (1) est debout, de telle manière que les tronçons (7a, 7b ; 8a, 8b) respectifs peuvent être repliés dans l'espace intérieur avec rapprochement simultané de la paroi avant (5) et de la paroi arrière (6).

3. Boîte à gants selon la revendication 1 ou 2,
**caractérisée en ce que**,
le tissu polyester est enduit de butyle.

4. Boîte à gants selon l'une quelconque des revendications précédentes,
**caractérisée en ce que**,
la paroi avant (5) et le couvercle (9) du coffret (1) sont constitués au moins partiellement d'une matière optiquement transparente, en particulier de polycarbonate.

5. Boîte à gants selon l'une quelconque des revendications précédentes,
**caractérisée en ce que**,
le couvercle de coffret (9) peut être relié aux parties latérales et à la paroi arrière (5) du coffret grâce à une fermeture à Velcro et/ou grâce à une fermeture à glissière (40), de manière préférée une fermeture à glissière en polyuréthane enduit étanche aux projections d'eau.

6. Boîte à gants selon l'une quelconque des revendications précédentes,
**caractérisée en ce que**,
des ouvertures d'adaptation (60 à 71) pouvant être fermées de manière hermétique sont prévues au niveau des parois latérales (5, 6, 7, 8) et au niveau du couvercle de coffret (9).

7. Boîte à gants selon l'une quelconque des revendications précédentes,
**caractérisée en ce que**,
les gants (50, 51) sont réalisés en butyle élastique au moins dans la région des manches (52, 53).
